# EUROPÄISCHE PATENTSCHRIFT

(11) **EP 0 379 134 B1**
(45) Veröffentlichungstag und Bekanntmachung des Hinweises auf die Patenterteilung: **24.03.1993**
(21) Anmeldenummer: 90100802.9
(22) Anmeldetag: 16.01.1990
(51) Int. Cl.: B23D 45/12, B23G 1/52

(54) **Verfahren und Vorrichtung zum Gewindeschneiden**
Process and device for threading
Procédure et disposition pour filetage

(30) Priorität: 18.01.1989 DE 3901332
(43) Veröffentlichungstag der Anmeldung: 25.07.1990
(73) Patentinhaber: Pfundt, Kurt, 91541 Rothenburg (DE)
(72) Erfinder: Pfundt, Kurt, 91541 Rothenburg (DE)
(74) Vertreter: Matschkur, Götz, Lindner Patent- und Rechtsanwälte

(56) Entgegenhaltungen:
- WO-A-81/02267
- CH-A- 649 019
- DE-C- 2 524 634

## Beschreibung

Die Erfindung betrifft ein Verfahren und eine Vorrichtung zum maschinellen Gewindeschneiden bei Installationsrohren, bei dem zunächst ein erstes Gewinde auf ein Rohstück geschnitten und ein das Gewinde aufweisender Teil des Rohstückes in abgemessener Länge abgetrennt wird. Hierfür sind entsprechende Gewindeschneidmaschinen mit einem drehantreibbaren Trenn- und Gewindeschneid-Aggregat und einer Klemmeinrichtung zur Bearbeitung von rohen Rohrstücken versehen.

Bei bekannten Gewindeschneidmaschinen dieser Art wird beim meist rohrförmigen Rohstück zunächst die Gewindestelle vermessen und dort ein Gewinde eingeschnitten. Danach wird der das Gewinde aufweisende Teil durch Sägen abgetrennt und von der Gewindeschneidmaschine entnommen. Bei Installationsrohren sind Gewinde in der Regel an den beiden Rohrenden anzubringen. Das bedeutet, daß beim Arbeiten nach der bekannten Methode das noch kein Gewinde aufweisende Restrohr, welches nach dem Absägen in der Maschine noch verblieben ist, entnommen werden muß; an dessen Stelle ist dann das abgelängte und an einem Ende mit einem Gewinde vesehene Rohrstück so einzuspannen, daß auch in das andere Ende ein Gewinde geschnitten und damit das Installationsrohr einbaufertig gemacht werden kann. Zum Herstellen eines weiteren Rohrstücks mit je einem Gewinde an den beiden Enden muß dann das bereits fertiggestellte Rohrstück entnommen, das Restrohr (Rohstück) wieder eingespannt, mit einem ersten Gewinde versehen, durchtrennt usw. (siehe oben) werden, was viele Arbeitsgänge erfordert.

Hieraus folgt das der Erfindung zugrundeliegende Problem, ein Verfahren und/oder eine Vorrichtung zum Gewindeschneiden bei Installationsrohren zu schaffen, welche in effizienter, rationeller Weise mit wenig Arbeitsschritten einen hohen Ausstoß an mit dem Gewinde versehenen Installationsrohren ermöglichen; dies soll insbesondere auf Baustellen beim Installieren von Rohrleitungen, vor allem Heizungsrohren, gegeben sein.

Zur Lösung wird erfindungsgemäß bei einem Verfahren mit den anfangs genannten Merkmalen vorgeschlagen, nach dem Ablängen das abgetrennte Teil und das restliche Rohstück voneinander beabstandet zu fixieren, zwischen diesen miteinander gekoppelte Gewinde-Schneidorgane zu positionieren, diese je am abgetrennten Teil und am restlichen Rohstück in Angriff zu bringen und gleichzeitig zur Bildung eines zweiten und dritten Gewindes zu betätigen.

Nach Beendigung des Gewindeschneidvorganges ist das abgetrennte Installationsrohr mit dem ersten und zweiten Gewinde versehen, welche in der Regel an den Rohrenden angebracht werden. Dieses fertig bearbeitete Installationsrohr kann von der entsprechenden Gewindeschneidmaschine entnommen werden, das restliche, das dritte Gewinde aufweisende Stück jedoch in der Maschine verbleiben. Dieses braucht lediglich axial verschoben und entsprechend der benötigten Länge durchtrennt zu werden. Die beiden so erhaltenen Trennstücke - eines enthält das (dritte) Gewinde - werden voneinander beabstandet so in einer Stellung fixiert, daß an beiden je ein Gewindeschneidorgan zugleich angreifen kann. Dabei wird mit dem erfindungsgemäßen Verfahren in überraschend wirkungsvoller Weise von der Tatsache Gebrauch gemacht, daß sich zwei Gewindeschneidorgane wirkungsmäßig relativ einfach miteinander verbinden, insbesondere antriebs- und funktionsmäßig koppeln und/oder synchronisieren sowie baulich kompakt vereinen lassen. Der mit der Erfindung erzielte Vorteil besteht vor allem darin, daß die voneinander getrennten Werkstücke simultan ablaufenden Gewindeschneidvorgängen unterworfen werden, das heißt, die zweiten und dritten (vierten und fünften, sechsten und siebten usw.) Gewinde werden jeweils zugleich hergestellt. Das nur ein Gewinde aufweisende Reststück braucht nicht vollständig aus der Gewindeschneidanlage entnommen, sondern darin nur zum Durchtrennen in seiner Position verstellt und dann vom abgetrennten Stück beabstandet zu werden.

Eine zweckmäßige Weiterbildung der Erfindung besteht darin, daß das abgetrennte Teil und das restliche Rohstück derart (voneinander beabstandet) fixiert werden, daß deren mittlere Längsachsen in einer Flucht verlaufen, das heißt, auf einer geraden Linie liegen. Bei dieser Anordnung liegen aufgrund der Beabstandung die beiden Trennstücke mit ihren Enden einander gegenüber, wo ja in aller Regel die Gewindeabschnitte angebracht werden sollen. Zudem lassen sich bei dieser koaxial beabstandeten Anordnung der zu bearbeitenden Stücke die beiden Gewindeschneidorgane baulich besonders kompakt integrieren. Andererseits liegt es auch im Rahmen der Erfindung, wenn das abgetrennte Teil und das restliche Rohstück derart fixiert werden, daß diese und/oder die (gedachten) Fortsetzungen von deren Längsachsen zueinander parallel beabstandet verlaufen. Mit dieser Erfindungsausbildung, bei der die zu bearbeitenden Werkstücke nebeneinander verlaufend positioniert werden, lassen sich Gewinde schneiden, die vor allem in mittleren Abschnitten des Werkstückes angeordnet werden müssen.

Um auf beiden Trennstücken (Rohstück und abgetrenntes Teil) jeweils ein Rechtsgewinde gleichzeitig realisieren zu können, besteht eine andere Ausbildung der Erfindung darin, daß die Schneidorgane an dem restlichen Rohstück und dem abgetrennten Teil im einander entgegengesetzten Drehsinn (gegensinnig) rotiert werden. Diese Ausbildung trägt zunächst der Tatsache Rechnung, daß maschinelles Gewindeschneiden meist über Rotationsbewegungen erfolgt. Mit ihr können, vor allem wenn die Trennstückenden einander auf gleicher Mittelachse gegenüberliegen, in einfacher Weise an den Trennstückenden zwei Rechtsgewinde in gleicher Zeit erzeugt werden.

Nach Beendigung des gleichzeitigen Schneidens zweier Gewinde wird das Teil, welches das erste und zweite Gewinde aufweist, aus der Gewindeschneidanlage entfernt, ein das dritte Gewinde aufweisender, weiterer Teil vom restlichen Stück in abgemessener Länge abgetrennt und im übrigen die in den vorherigen Absätzen genannten Verfahrensschritte entsprechend wiederholt. Es liegt auf der Hand, daß das erfindungsgemäße Verfahren nebst Weiterbildungen auch zur automatisierten Massenfabrikation von beispielsweise Leitungsrohren mit gewindeaufweisenden Enden geeignet ist.

Zur Lösung des obigen Problems wird ferner erfindungsgemäß eine Gewindeschneidmaschine für Installationsrohre mit einem drehantreibbaren Trenn- und Gewindeschneid-Aggregat und einer Klemmeinrichtung zur Bearbeitung von rohen Rohrstücken vorgeschlagen, wobei das Aggregat zwischen relativ zueinander verschieb- und feststellbaren Klemmelementen angeordnet ist und an seinen gegenüberliegenden, Enden getrennter Rohrstücke zugewandten Gehäuseseiten Gewindeschneidköpfe zur gleichzeitigen Bearbeitung der getrennten Rohrstücke aufweist. Mit den Klemmelementen können die beiden getrennten Rohrstücke im Abstand voneinander positioniert werden. Indem das Gewindeschneid-Aggregat an seinen gegenüberliegenden Seiten Gewindeschneidköpfe aufweist, welche je einem der getrennten Rohrstücke zugewandt sind, kann ein gleichzeitiges Gewindeschneiden an den beiden getrennten Rohrstücken stattfinden. Die Trenneinrichtung kann von der Gewindeschneideinrichtung durchaus unabhängig sein. Wie das Trennorgan im einzelnen angeordnet ist, ist für die Erfindung nicht von entscheidender Wichtigkeit. Für den Erfindungsgedanken ist es ausreichend, daß die Maschine ein Trennaggregat und ein Gewindeschneidaggregat aufweist, welche durchaus zu einer Einheit kombiniert sein können, was allerdings nicht zwingend ist. Während das Gewindeschneidaggregat vorteilhafterweise drehantreibbar ist, kann als Trennorgan jede beliebige Säge eingesetzt werden.

Zur Realisierung der Gewindeschneidköpfe im Rahmen der Erfindung sind beispielsweise rotierbare Schneidbacken mit innen liegenden Schneidkanten zweckmäßig. In weiterer Ausbildung können die Gewindeschneidköpfe von einem gemeinsamen Antrieb über ein Umkehrgetriebe gegensinnig rotiert werden. Damit können - entsprechend den obigen Ausführungen - vorteilhaft an gegenüberliegenden Enden unterschiedlicher Rohrstücke jeweils Rechtsgewinde erzeugt werden. Unter Umkehrgetriebe ist vorliegend eine aus Zahnrädern mit beispielsweise kegeliger Außenverzahnung bestehende Vorrichtung verstanden, die eine Eingangs-Drehbewegung in zwei einander gegenläufige Drehbewegungen um eine identische Drehachse umsetzt. Die Realisierung derartiger Getriebe ist dem Fachmann geläufig.

Vor allem wenn, wie oben ausgeführt, die zu bearbeitenden Trennstücke voneinander koaxial beabstandet sind, so daß deren jeweilige Enden einander bündig gegenüberliegen, ist eine weitere Ausbildung der erfindungsgemäßen Maschine zweckmäßig, nach welcher die beiden Gewindeschneidköpfe symmetrisch zu einer gemeinsamen Mittelachse angeordnet sind. Diese Mittelachse bildet in aller Regel auch die Rotationsachse für den Gewindeschneidvorgang. Auf die genannte, beispielhafte Anordnung der Trennstücke angewendet bedeutet dieser Gedanke, daß die Gewindeschneidköpfe auf gleicher Höhe sowie in waagerechter Linie versetzt liegen; dabei sind sie je einem der gegenüberliegenden Enden der unterschiedlichen Trennstücke wirkungsmäßig zugewandt. In diesem Zusammenhang besteht eine zweckmäßige Realisierung für das Trennorgan in einem kreisrunden Sägeblatt, welches um die gemeinsame Mittelachse der Gewindeschneidköpfe rotierbar angeordnet ist.

Mit Vorteil sind die Klemmelemente als Schraubstöcke mit in einer Flucht liegenden beziehungsweise zueinander bündig angeordneten Klemmbacken ausgebildet. So können die beiden Trennstücke leicht so festgestellt werden, daß deren mittlere Längsachsen miteinander fluchten. Im Zusammenhang mit diesem Gedanken besteht eine vorteilhafte Weiterbildung der Erfindung darin, daß die Gewindeschneidköpfe und das Sägeblatt zu einer Baueinheit konstruktiv vereint und mittels eines Handgriffs in die gemeinsame Flucht der Schraubstöcke manuell verstellbar sind.

Wenn die beiden Gewindeschneidköpfe gleichmäßig um eine Mittelachse/Drehachse angeordnet sind, besteht eine vorteilhafte Weiterbildung der Erfindung darin, eine parallel zur Mittelachse der Gewindeschneidköpfe verlaufende Linearführung vorzusehen, auf welcher wenigstens das bewegliche Klemmelement, die Gewindeschneidköpfe und/oder das Trennorgan hin- und herbewegbar geführt sind. Eine besonders vorteilhafte Ausführung und Anwendung für die Linearführung besteht hierbei darin, daß diese eine oder mehrere Führungswellen aufweist, wobei an einer die baulich vereinten Gewindeschneid- und/oder Trennorgane beispielsweise über den Handgriff in die gemeinsame, freie Flucht der Schraubstöcke verschwenkbar angelenkt sind. Damit wird vor allem die Handhabbarkeit des Trennorgans beziehungsweise Sägeblatts, wenn das restliche, ein Gewinde aufweisende Stück im in beide Klemmelemente eingespannten Zustand durchtrennt werden soll, erhöht. Die Linearführung läßt sich speziell durch zwei parallele Führungswellen, von denen die eine als die Anlenkstelle und die andere als Widerhalt für eine etwaige Verriegelungseinrichtung an der angelenkten Baueinheit dient, in wirtschaftlicher und mechanisch ausreichend stabiler Weise realisieren. Zudem wird jede Führungswelle noch für eine weitere Funktion - Bildung der Anlenkstelle beziehungsweise des Widerhalts - in konstruktiv einfacher Weise verwertet.

Beim Betrieb der erfindungsgemäßen Gewindeschneidmaschine tritt der Arbeitsschritt auf, das benötigte Rohr im richtigen Maß vom restlichen Rohrstück abzulängen. Um das hierfür erforderliche Meßgerät immer griffbereit zu haben, ist erfindungsgemäß vorgesehen, in ein Klemmelement, vorzugsweise in das feststehende Klemmelement ein Rollbandmaß baulich zu integrieren, dessen ausziehbares Meßband zu einer Gewindeschneidstelle bewegbar ist. Damit wird der Bedienungskomfort der erfindungsgemäßen Gewindeschneidmaschine erhöht.

Weitere Einzelheiten, Merkmale und Vorteile der Erfindung ergeben sich aus der nachfolgenden Beschreibung eines bevorzugten Ausführungsbeispiels der Erfindung sowie anhand der Zeichnung. Darin zeigen jeweils in schematischer Prinzipskizze:
- Fig. 1: eine Seitenansicht auf die Gewindeschneidmaschine beim Beginn des Arbeitsschritts "trennen",
- Fig. 2: eine entsprechende Ansicht beim Beginn des Arbeitsschrittes "gewindeschneiden",
- Fig. 3: eine entsprechende Ansicht nach Beendigung des Arbeitsschrittes "gewindeschneiden",
- Fig. 4: eine Ansicht gemäß der Schnittlinie A-A in Figur 1, und
- Fig. 5: eine Ansicht gemäß der Schnittlinie B-B in Figur 2.

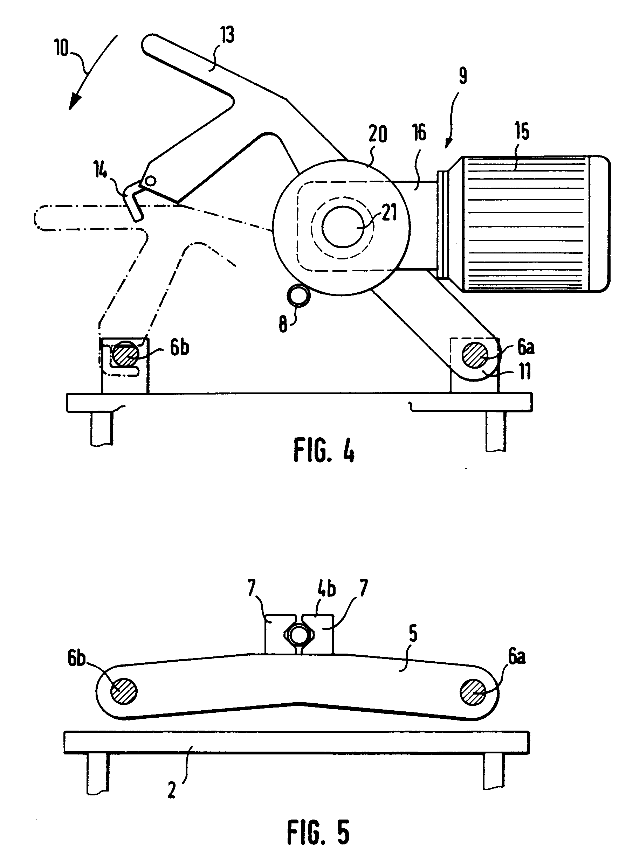

Gemäß Zeichnung ist die beispielhafte Gewindeschneidmaschine 1 auf einem Tisch 2 befestigt, der gegen den Boden 3 abgestützt ist. Sie weist zwei als Klemmelemente dienende Schraubstöcke 4 auf, von denen der eine Schraubstock 4a auf dem Tisch 2 unverrückbar befestigt ist. Der andere (in der Zeichnung links dargestellte) Schraubstock 4b sitzt auf einem länglichen Steg 5 (vgl. Figur 5), dessen beide Enden je von einer Führungswelle 6a,6b quer sowie gleitend verschiebbar durchsetzt sind. Die Klemmbacken 7 der Schraubstökke 4a,4b sind miteinander eine gemeinsame Flucht bildend angeordnet, sodaß in diesen ein vom feststehenden Schraubstock 4a zum beweglichen Schraubstock 4b führendes und parallel zu den Führungswellen 6a,6b verlaufendes, gerades Rohrstück 8 aufgenommen werden kann.

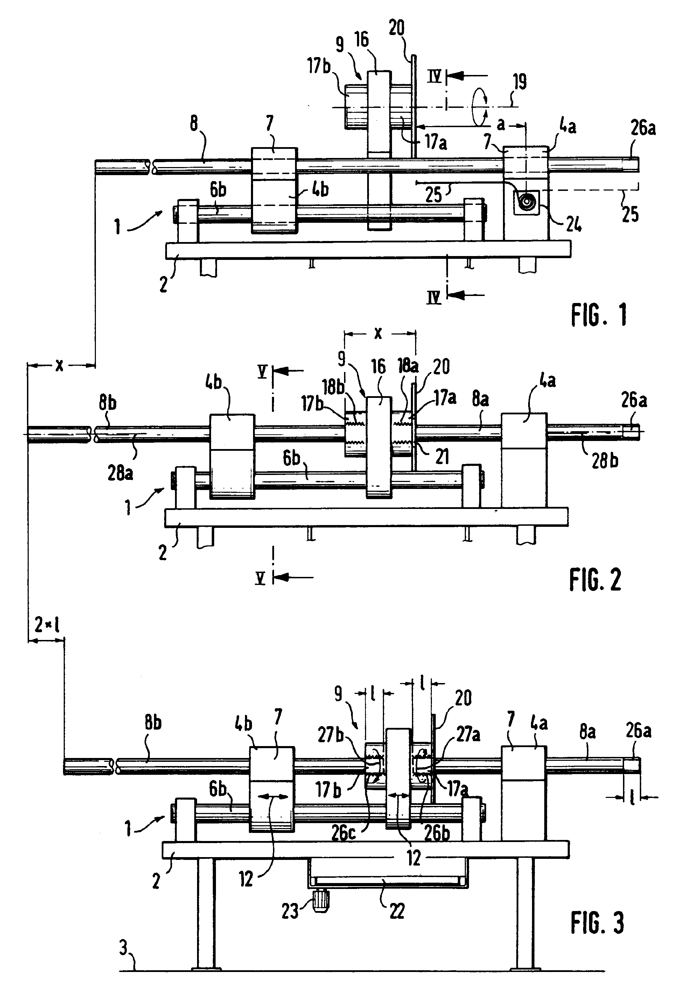

Auf der einen Führungswelle 6a ist ein Gewindeschneidaggregat um die Längsachse dieser Welle 6a schwenkbar 10 angelenkt 11 sowie in Wellenlängsrichtung hin- und herverschiebbar 12 gelagert, ebenso wie der bewegliche Schraubstock 4b in Längsrichtung 12 hin- und herverschiebbar ist. Mittels eines Handgriffs 13 kann das gesamte Gewindeschneidaggregat 9 in Richtung 10 zur linken Führungswelle 6b bewegt und dort gegenüber der Schwenkrichtung 10 und/oder der linearen Bewegungsrichtung 12 mittels einer Verriegelungseinrichtung 14 festgestellt werden. Das Aggregat 9 weist einen Motor 15 auf, der ein Getriebe 16 antreibt. An dessen beiden entgegengesetzten Gehäuseseiten sind jeweils Gewindeschneidorgane 17a,17b mit innen liegenden Gewindeschneidbacken 18a,18b angeordnet. Auf der dem feststehenden Schraubstock 4a zugewandten Seite des diesem Schraubstock benachbarten Schneidorgans 17a ist koaxial, das heißt um die gleiche Drehachse 19 wie die Schneidorgane 17 rotierbar ein kreisrundes Sägeblatt 20 angeordnet. Es ist in seinem Zentrum mit einer zu seinem Rand konzentrischen Aussparung 21 versehen. Unterhalb des Tisches 2 beziehungsweise an dessen Unterseite sind eine Auffangwanne 22 mit Sieb für Schmierflüssigkeit sowie eine Pumpe 23 aufgehängt. Gemäß Figur 1 ist in den feststehenden Schraubstock 4a ein Rollbandmaß 24 eingebaut, dessen Meßband 25 entweder zur Mitte oder zum Ende des Rohrstückes 8 hin (letzteres gestrichelt angedeutet) ausziehbar ist und in seinen Markierungen an spezifische Gegebenheiten der Gewindeschneidmaschine, zum Beispiel den Abstand zwischen dem Sägeblatt 20 und dem feststehenden Schraubstock 4a sowie der Gewindelänge 1 angepaßt sein kann.

In Figuren 1 und 4 ist die Gewindeschneidmaschine in der Arbeitsstellung gezeigt, in der ein einziges Rohrstück 8 in den beiden Schraubstöcken 4a,4b eingespannt ist. Durch einen vorher erfolgten Schneidvorgang ist am dem feststehenden Schraubstock 4a benachbarten Ende des Rohrstücks 8 bereits ein erstes Gewinde 26a eingeschnitten. Das Sägeblatt 20 wird mit seiner Schneidkante gerade auf das Rohrstück 8 aufgesetzt und über den Handgriff 13 in Schwenkrichtung 10 (vgl. Figur 4) nach unten bewegt.

Hieraus resultiert, wie in Figur 2 ersichtlich, das abgetrennte Rohrteil 8a, welches sich im feststehenden Schraubstock 4a eingespannt befindet, und das übrige Rohstück 8b, welches im bewegbar geführten Schraubstock 8b eingespannt ist. Gemäß Figur 2 sind das abgetrennte Teil 8a und das restliche Rohstück 8b voneinander im Abstand X positioniert, der etwa der gesamten Erstreckung des Gewindeschneidaggregats 9 in Richtung 12 der Führungswellen 6 entspricht. Die- Positionierung läßt sich dadurch herbeiführen, daß der bewegliche Schraubstock 4b in Bewegungsrichtung 12 passend vom Aggregat 9 beziehungsweise vom abgetrennten Rohrteil 8a weggeschoben wird. Das Aggregat 9, das zu Beginn des Trennvorganges gemäß Figur 1 sich in der in Figur 4 gezeigten Stellung befand, ist nun - wie in Figur 2 dargestellt - gemäß Schwenkrichtung 10 (Figur 4) zur linken Führungswelle 6b nach unten bewegt, sodaß das Aggregat 9 in die vorher durch die Beabstandung X entstandene freie Flucht zwischen den beiden Trennstücken 8a,8b vollständig eingetaucht ist. Nun können die Schneidorgane 17a,17b in Rotation versetzt und so an jedem der gegenüberliegenden Enden der beiden Trennstücke 8a,8b ein Gewindeschneidvorgang gestartet werden.

Gemäß Figur 3 ist das Ende des abgetrennten Rohrteils 8a mit einem zweiten Gewinde 26b und das Ende des restlichen Rohstücks 8b mit einmem dritten Gewinde 26c - jeweils fertig - versehen. Die dazugehörigen Gewindeschneidvorgänge sind zueinander simultan dadurch zustandegebracht, daß einerseits zur Erzeugung des zweiten Gewindeabschnitts 26b das Gewindeschneidaggregat 9 um eine Gewindelänge 1 in Richtung auf den ersten Gewindeabschnitt 26a am äußeren Ende des abgetrennten Rohrstücks 8a gerückt worden ist; andererseits ist zur Schaffung des dritten Gewindeabschnitts 26c der verschiebbare Schraubstock 4b mit dem restlichen Rohstück 8b in dieselbe Richtung beziehungsweise zum Gewindeschneidaggregat 9 hin um etwa dieselbe Gewindelänge 1 bewegt worden. Im vorliegenden Beispiel wird von gleichen Gewindelängen für die Gewindeabschnitte 26a-26c ausgegangen. Um den zweiten beziehungsweise dritten Gewindeabschnitt 26b beziehungsweise 26c jeweils mit einem Rechtsgewinde zu versehen, wurden die Schneidorgane 17a,17b in einander entgegengesetzten Drehsinnen 27a beziehungsweise 27b rotiert.

## Patentansprüche

1. Verfahren zum maschinellen Gewindeschneiden bei Installationsrohren, bei dem zunächst ein erstes Gewinde (26a) auf ein Rohstück (8) geschnitten und ein das Gewinde (26a) aufweisender Teil (8a) des Rohstückes (8) in abgemessener Länge (25) abgetrennt wird, dadurch gekennzeichnet, daß dann das abgetrennte Teil (8a) und das restliche Rohstück (8b) voneinander beabstandet (x) fixiert, zwischen diesen miteinander gekoppelte (16) Gewinde-Schneidorgane (17a, 17b) positioniert, je am abgetrennten Teil (8a) und am restlichen Rohstück (8b) in Angriff gebracht und gleichzeitig zur Bildung eines zweiten und dritten Gewindes (26b, 26c) betätigt werden.

2. Verfahren nach Anspruch 1, dadurch gekennzeichnet, daß das abgetrennte Teil (8a) und das restliche Rohstück (8b) derart fixiert werden, daß deren mittlere Längsachsen (28a, 28b) in einer Flucht verlaufen.

3. Verfahren nach Anspruch 1, dadurch gekennzeichnet, daß das abgetrennte Teil und das restliche Rohstück derart fixiert werden, daß diese und/oder die Fortsetzungen von deren Längsachsen zueinander parallel beabstandet verlaufen.

4. Verfahren nach einem der vorhergehenden Ansprüche, dadurch gekennzeichnet, daß die Schneidorgane (17a, 17b) an dem restlichen Rohstück (8b) und dem abgetrennten Teil (8a) gegensinnig (27a, 27b) rotiert werden.

5. Verfahren nach einem der vorhergehenden Ansprüche, dadurch gekennzeichnet, daß nach beendeter Betätigung der beiden Schneidorgane (17a, 17b) das zwei Gewinde (26a, 26b) aufweisende Teil (8a) entfernt, ein das dritte Gewinde (26c) aufweisender, weiterer Teil vom restlichen Stück (8b) in abgemessener Länge (25) abgetrennt und die Verfahrensschritte gemäß kennzeichnendem Teil des Anspruchs 1 entsprechend wiederholt werden.

6. Gewindeschneidmaschine für Installationsrohre mit einem drehantreibbaren Trenn- und Gewindeschneid-Aggregat (20, 9) und einer Klemmeinrichtung (4) zur Bearbeitung von rohen Rohrstücken (8), dadurch gekennzeichnet, daß das Aggregat (20, 9) zwischen relativ zueinander verschieb- und feststellbaren Klemmelementen (4a, 4b) angeordnet ist und an seinen gegenüberliegenden, Enden getrennter Rohrstücke (8a, 8b) zugewandten Gehäuseseiten Gewindeschneidköpfe (17a, 17b) zum gleichzeitigen Bearbeiten der getrennten Rohr- stücke (8a, 8b) aufweist.

7. Gewindeschneidmaschine nach Anspruch 6, dadurch gekennzeichnet, daß die Schneidorgane (17a, 17b) jeweils mit rotierbaren Schneidbacken (18a, 18b) mit innen liegenden Schneidkanten gebildet sind.

8. Gewindeschneidmaschine nach Anspruch 6 oder 7, dadurch gekennzeichnet, daß die Schneidorgane (17) von einem gemeinsamen Antrieb (15) über ein Umkehrgetriebe (16) gegensinnig rotiert werden.

9. Gewindeschneidmaschine nach einem der Ansprüche 6 - 8, dadurch gekennzeichnet, daß die beiden Schneidorgane (17a, 17b) symmetrisch zu einer gemeinsamen Mittelachse (19, 28a, 28b) angeordnet sind.

10. Gewindeschneidmaschine nach Anspruch 9, dadurch gekennzeichnet, daß das Trennorgan als kreisrundes Sägeblatt (20) ausgebildet ist, welches um die gemeinsame Mittelachse (19) der Schneidorgane (17a, 17b) rotierbar angeordnet ist.

11. Gewindeschneidmaschine nach einem der Ansprüche 6 - 10, dadurch gekennzeichnet, daß die Klemmelemente als Schraubstöcke (4) mit in einer Flucht liegenden Klemmbacken (7) ausgebildet sind.

12. Gewindeschneidmaschine nach Anspruch 10 und Anspruch 11, dadurch gekennzeichnet, daß die Schneidorgane (17a, 17b) und das Sägeblatt (20) zu einer Baueinheit (9) vereint und mittels Handgriff (13) in die gemeinsame Flucht der Schraubstöcke (4) verstellbar sind.

13. Gewindeschneidmaschine nach Anspruch 9, 10, 9 und 11 oder 12, gekennzeichnet durch eine parallel zur Mittelachse (19, 28) der Schneidorgane (17) verlaufende Linearführung (6), längs welcher wenigstens das bewegliche Klemmelement (4b), die Schneidorgane (17) und/oder das Trennorgan (20) hin- und herbewegbar (12) gelagert sind.

14. Gewindeschneidmaschine nach Anspruch 13, dadurch gekennzeichnet, daß die Linearführung (6) eine oder mehrere Führungswellen (6a, 6b) aufweist, wobei an einer (6a) die baulich vereinten (9) Schneid- und/oder Trennorgane (17, 20) in die gemeinsame Flucht der Schraubstöcke (4) verschwenkbar (10) angelenkt sind.

15. Gewindeschneidmaschine nach Anspruch 14, gekennzeichnet durch zwei parallele Führungswellen (6a, 6b), von denen die eine (6a) als die Anlenkstelle und die andere (6b) als Widerhalt für eine Verriegelungseinrichtung (14) an der angelenkten Baueinheit (9) dient.

16. Gewindeschneidmaschine nach einem der Ansprüche 6 bis 15, mit wenigstens einer Klemmeinrichtung (4) und einem Durchtrennorgan (20) für zu bearbeitende Rohstücke (8), gekennzeichnet durch ein im Klemmelement (4) baulich integriertes Rollbandmaß (24), dessen ein oder mehrere Meßbänder (25) zu einer Gewindeschneid-und/oder Trennstelle ausziehbar angeordnet sind.

## Claims

1. A method for the mechanical threading of installation pipes, in which a first thread (26a) is firstly cut into a pipe element (8) and a section (8a) of the pipe element (8) comprising the thread (26a) is cut to a measured length (25), characterised in that the separated section (8a) and the remaining pipe element (8b) are then secured at a fixed distance (x) from one another, threading members (17a, 17b) coupled with one another are positioned between the separated section (8a) and the remaining pipe element (8b), are brought into engagement with the separated section (8a) and the remaining pipe element (8b) respectively and simultaneously actuated to form a second and third thread (26b, 26c).

2. A method according to claim 1, characterised in that the separated section (8a) and the remaining pipe element (8b) are secured in such a manner that their median longitudinal axes (28a, 28b) are in alignment.

3. A method according to claim 1, characterised in that the separated section and the remaining pipe element are secured in such a manner that they and/or the extensions of their median longitudinal axes extend parallel to one another, spaced apart.

4. A method according to one of the preceding claims, characterised in that the threading members (17a, 17b) acting upon the remaining pipe element (8b) and the separated section (8a) are rotated in opposite directions (27a, 27b).

5. A method according to one of the preceding claims, characterised in that, after the completed operation of the two threading members (17a, 17b), the section (8a) comprising two threads (26a, 26b) is removed, a further section of the remaining length (8b) comprising the third thread (26c) is cut to a measured length (25), and the step according to the characterising part of claim 1 is correspondingly repeated.

6. A threading machine for installation pipes with a rotationally drivable separating and threading aggregate (20, 9) and a clamping device (4) for machining blank pipe elements (8), characterised in that the aggregate (20, 9) is arranged between clamping elements (4a, 4b), which can be displaced and locked relative to one another, and comprises threading heads (17a, 17b) on its housing sides facing opposite ends of separated pipe elements (8a, 8b) for simultaneously machining the separated pipe elements (8a, 8b).

7. A threading machine according to claim 6, characterised in that the threading members (17a, 17b) are formed in each case with rotatable cutting jaws (18a, 18b) with inwardly facing cutting edges.

8. A threading machine according to claim 6 or 7, characterised in that the threading members (17) are rotated in opposite directions by a common drive (15) via reversing gearing (16).

9. A threading machine according to one of claims 6 to 8, characterised in that the two threading members (17a, 17b) are arranged symmetrical to a common central axis (19, 28a, 28b).

10. A threading machine according to claim 9, characterised in that the separating member is designed as a circular saw blade (20), which is arranged so as to rotate about the common central axis (19) of the threading members (17a, 17b).

11. A threading machine according to one of claims 6 to 10, characterised in that the clamping elements are designed as vices (4) with aligned clamping jaws (7).

12. A threading machine according to claim 10 and claim 11, characterised in that the threading members (17a, 17b) and the saw blade (20) are combined to form a structural unit (9) and can be adjusted by means of a handle (13) into the common alignment of the vices (4).

13. A threading machine according to claim 9, 10, 9 (sic) and 11 or 12, characterised by a linear guide (6), which extends parallel to the central axis (19, 28) of the threading members (17) and along which at least the movable clamping element (4b), the threading members (17) and/or the separating member (20) are mounted so as to be displaceable back and forth (12).

14. A threading machine according to claim 13, characterised in that the linear guide (6) comprises one or more guide shafts (6a, 6b), the structurally combined (9) threading and/or separating members (17, 20) being articulatedly mounted on one of said shafts (6a) so as to pivot into the common alignment of the vices (4).

15. A threading machine according to claim 14, characterised by two parallel guide shafts (6a, 6b), one (6a) of said shafts acting as the articulation site and the other (6b) as a grip for a locking device (14) on the articulated structural unit (9).

16. A threading machine according to one of claims 6 to 15, with at least one clamping device (4) and a parting member (20) for the pipe elements (8) to be machined, characterised by a coiled tape measure (24), which is structurally integrated in the clamping element (4) and whose one or more measuring tapes (25) are arranged so as to be extendable up to a threading and/or separation site.

## Revendications

1. Procédé pour le filetage à la machine dans des tubes d'installation, dans lequel un premier filet (26a) est d'abord taillé sur une pièce brute (48) et une partie (8a) de la pièce brute (8) présentant le filet (26a) est sectionnée à une longueur mesurée (25), caractérisé en ce qu'ensuite la partie sectionnée (8a) et la pièce brute restante (8b) sont fixées espacées (x) l'une de l'autre, des organes de filetage (17a, 17b) couplés l'un avec l'autre (16) sont positionnés entre celles-ci, sont chacun amenés à attaquer la partie sectionnée (8a) et la pièce brute restante (8b) et sont actionnés simultanément pour former un deuxième et un troisième filets (26b, 26c).

2. Procédé selon la revendication 1, caractérisé en ce que la partie sectionnée (8a) et la pièce brute restante (8b) sont fixées d'une manière telle, que leurs axes longitudinaux (28a, 28b) sont alignés entre eux.

3. Procédé selon la revendication 1, caractérisé en ce que la partie sectionnée et la pièce brute restante sont fixées d'une manière telle, qu'elles-mêmes et/ou les prolongements de leurs axes longitudinaux s'étendent espacés, parallèles l'un à l'autre.

4. Procédé selon l'une des revendications précédentes, caractérisé en ce que les organes de filetage (17a, 17b) sont entraînés en rotation en sens inverses à la pièce brute restante (8b) et à la partie sectionnée (8a).

5. Procédé selon l'une des revendications précédentes, caractérisé en ce que la partie (8a) qui présente deux filets (26a, 26b) est écartée après la fin de l'actionnement des deux organes de filetage (17a, 17b), une autre pièce, présentant le troisième filet (26c), est sectionnée de la pièce restante (8b) à une longueur mesurée (25) et les étapes du procédé sont répétées d'une manière qui correspond à la partie caractérisante de la revendication 1.

6. Machine de filetage pour tubes d'installation comprenant pour l'usinage de pièces tubulaires brutes (8) un ensemble de sectionnement et de filetage susceptible d'être entraîné en rotation (20, 9) et un dispositif de serrage (4), caractérisée en ce que l'ensemble (20, 9) est agencé entre des éléments de serrage (4a, 4b) susceptibles de coulisser et d'être immobilisés l'une par rapport à l'autre et présente, pour l'usinage simultané des pièces tubulaires séparées (8a, 8b), des têtes de filetage (17a, 17b) à ses côtés de carter opposés, tournés vers des extrémités de pièces tubulaires séparées (8a, 8b).

7. Machine de filetage selon la revendication 6, caractérisée en ce que les organes de filetage (17a, 17b) sont formés chaque fois avec des filières rotatives (18a, 18b) pourvues d'arêtes de coupe situées à l'intérieur.

8. Machine de filetage selon la revendication 6 ou 7, caractérisée en ce que les organes de filetage (17) sont entraînés en rotation en sens inverses par un entraînement commun (15) par l'intermédiaire d'une transmission d'inversion (16).

9. Machine de filetage selon l'une des revendications 6 à 8, caractérisée en ce que les deux organes de filetage (17a, 17b) sont agencés symmétriquement par rapport à un axe central commun (19, 28a, 28b).

10. Machine de filetage selon la revendication 9, caractérisée en ce que l'organe de séparation est réalisé sous forme d'une lame de scie ronde (20), qui est agencée pivotable autour de l'axe commun (19) des organes de filetage (17a, 17b).

11. Machine de filetage selon l'une des revendications 6 à 10, caractérisée en ce que les éléments de serrage sont réalisés sous forme d'étaux (4) avec des mâchoires de serrage (7) se trouvant en alignement.

12. Machine de filetage selon la revendication 10 ou la revendication 11, caractérisée en ce que les organes de filetage (17a, 17b) et la lame de scie (20) sont réunis en une unité modulaire (9) et sont déplaçables, au moyen d'une poignée (13), dans l'alignement commun des étaux (4).

13. Machine de filetage selon la revendication 9, 10, 9 et 11 ou 12, caractérisée par un guidage linéaire (6) s'étendant parallèle à l'axe central (19, 28) des organes de filetage (17), le long duquel au moins l'élément mobile de serrage (4b), les organes de filetage (17) et/ou l'organe de séparation (20) sont logés déplaçables en va-et-vient (12).

14. Machine de filetage selon la revendication 13, caractérisée en ce que le guidage linéaire (6) présente un ou plusieurs arbres de guidage (6a, 6b), les organes de filetage et/ou de séparation (17, 20) réunis en une unité modulaire (9) étant articulés pivotables (10) à l'un d'eux (6a) dans l'alignement commun des étaux (4).

15. Machine de filetage selon la revendication 14, caractérisée par deux arbres de guidage parallèles (6a et 5b) parmi lesquels l'un (6a) sert d'emplacement d'articulation et l'autre (6b) sert d'arrêt en butée pour un dispositif de verrouillage (14) à l'unité modulaire articulée (9).

16. Machine de filetage selon l'une des revendications 6 à 15, comprenant au moins un dispositif de serrage (4) et un organe de sectionnement (20) pour des pièces brutes à usiner (8), caractérisée par un dispositif de mesure à enroulement de ruban intégré structurellement (24), dont un ou plusieurs rubans de mesure (25) sont agencés de manière à pouvoir être étirés jusqu'à un emplacement de filetage et/ou de séparation.
